# EUROPÄISCHE PATENTSCHRIFT

(11) **EP 3 393 270 B1**
(45) Veröffentlichungstag und Bekanntmachung des Hinweises auf die Patenterteilung: **22.03.2023**
(21) Anmeldenummer: 16826038.8
(22) Anmeldetag: 21.12.2016
(51) Int. Cl.: A23K 10/20, A23K 20/163, A23K 50/40, A23K 50/45, A23K 50/48

(54) **TIERFUTTERPRODUKT UND HERSTELLUNG DESSELBEN**
ANIMAL FEED PRODUCT AND MANUFACTURE THEREOF
ALIMENT POUR ANIMAUX ET SA FABRICATION

(30) Priorität: 22.12.2015 EP 15202238
(43) Veröffentlichungstag der Anmeldung: 31.10.2018
(73) Patentinhaber: Herbert Ospelt Anstalt, 9487 Bendern (LI)
(72) Erfinder: HILCK, Mirco, 9487 Bendern (LI); FRICK, Sylvester, 9487 Bendern (LI)
(74) Vertreter: Bogensberger, Burkhard
(86) Internationale Anmeldenummer: PCT/EP2016/082272
(87) Internationale Veröffentlichungsnummer: WO 2017/109015

(56) Entgegenhaltungen:
- WO-A1-2014/196628
- CA-A- 560 490
- CA-A1- 2 914 224
- DE-A1-102007 034 214
- DE-A1-102013 103 541
- DE-A1-102014 107 055
- DE-U1-202011 001 952
- GB-A- 1 470 745
- US-A- 3 635 723
- US-A1- 2003 207 006
- US-A1- 2004 052 906

## Beschreibung

### TECHNISCHES GEBIET

Die vorliegende Erfindung bezieht sich auf ein Hunde- und Katzenfutterprodukt aus der Kategorie Nassfutter, welches zur Fütterung aus der Hand ohne weitere Hilfsmittel geeignet ist und in Schlauchbeuteln angeboten wird.

### STAND DER TECHNIK

Im Stand der Technik sind zahlreiche Tiernahrungsmittel für Haustiere bekannt, welche als Allein- oder Ergänzungsfutter in verschiedenen Formen und Verpackungen in den Handel kommen.

Tierfutterprodukte für Katzen und/oder Hunde umfassen Trockenfutter, Halbfeuchtfutter und Nassfutter-Varianten. Letztere werden überwiegend als Stückchen in Brät, Stückchen in Sauce oder Stückchen in Gelee in verschlossenen Dosen, Schalen oder Standbeuteln im Handel angeboten.

Als weitere, kleine Futtereinheiten, die man einem Hund oder einer Katze als Belohnung oder als Zwischenmahlzeit anbieten kann, sind im Stand der Technik auch fliessfähige Tiernahrungsmittel mit einer ketchupartigen Konsistenz sowie niedrig-viskose, flüssige Tiernahrungsmittel bekannt, die beispielswiese in Schlauchbeuteln aus wasserbeständiger Folie, meist aus Aluminiumverbundfolie oder Kunststoffverbundfolie mit und ohne Sperrschichten abgefüllt sind.

Ein derartiges Tierfutterprodukt mit flüssigem Inhalt, das als Katzen- oder Hunde-Snack verwendet werden kann, ist aus WO 2010/1 33376 bekannt.

Weiters offenbart US 3,635,723 ein Nassfuttermittel in Form eines stabilen Gels in einem Kunststoffbeutel, zur Versorgung von Laborratten mit ausreichend Flüssigkeit während eines mehrstündigen Transportes. Dabei soll die Verpackung von den Ratten durchgebissen und das Gel daraus nach Bedarf entnommen werden.

DE 102007034214 beschreibt die Bereitstellung eines thixotropen oder pseudoplastischen Futtermittels in Form einer niedrigviskosen oder hochviskosen Futtermittel-Lösung, die in eine Flasche oder einen Becher abgefüllt wird und durch "heftiges Schütteln" in eine niedriger viskose Futtermittellösung überführbar sein muss, um das gelartige Tierfuttermittel in einen Fressnapf giessen zu können, wo es sich danach wieder etwas verfestigt.

DE 202011001952 U1 bezieht sich auf eine Mehrkammer-Verpackung für stabförmige Tiernahrungsmittel, die aus zwei übereinander liegenden Folien besteht, welche durch Siegelnähte so miteinander verbunden sind, dass mehrere längliche Kammern nebeneinander und hintereinander gebildet werden, die jeweils von Siegelnähten umgeben sind und je ein stabförmiges Tierfuttermittel enthalten. Damit soll ein Verpackungssystem bereit gestellt werden, in welchem Tierfuttersticks mit unterschiedlicher Zusammensetzung gleichzeitig enthalten sind, um einer allfälligen einseitigen Ernährung des Haustiers entgegen zu wirken.

WO2014/196628A1 bzw. EP3011840A1 offenbaren niedrig-viskose, gelartige Futtermittel einer Viskosität von 25-35 dPa.s (= 2500 - 3500 mPa.s) mit dem Ziel, Tierfuttermittel bereit zu stellen, welche auch von verwöhnten, übersättigten Haustieren noch gefressen werden.

### KURZE BESCHREIBUNG DER ERFINDUNG

Die Handhabung von fliessfähigen, insbesondere niedrig-viskosen, Tiernahrungsmitteln, vor allem wenn sie in - meist länglichen - Schlauchbeuteln zum Aufreissen abgepackt sind, kann zu ungewolltem Verschütten und dadurch zum Verschmutzen von Kleidern, Möbeln oder sonstigen Wohnungseinrichtungen wie z.B. Teppichen, Boden, Bodenbelägen, und dergleichen führen.

Ausserdem setzt die Verfütterung solcher fliessfähiger Tiernahrungsmittel im Regelfall die Verwendung einer Unterlage, insbesondere einer Futterschale, eines Tellers, eines Löffels oder eines ähnlichen Hilfsmittels voraus.

Dem gegenüber ist es die Aufgabe der vorliegenden Erfindung, ein Tierfutterprodukt bereit zu stellen, welches die Nachteile eines flüssigen Tiernahrungsmittels überwindet, indem es ein Futtermittel aus der Kategorie "Nassfutter" umfasst, das bei Raumtemperatur nicht fliessfähig ist sondern typischerweise als länglicher Strang, insbesondere in Form eines Stäbchens oder Stängels, ausgebildet ist und in einem, der Form des Futtermittels angepassten, beispielsweise länglichen, Schlauchbeutel abgepackt ist. Das Futtermittel weist aufgrund des hohen Wassergehalts eine weiche, gleichzeitig aber stabile und kompakte, wurstähnliche Konsistenz mit fleischiger Textur auf. Mit "stabil und kompakt" ist gemeint, dass das Futtermittel, wenn es aus einem einseitig geöffneten Schlauchbeutel in horizontaler Richtung heraus befördert wird, beispielsweise vom geschlossenen Ende ausgehend durch das gegenüberliegende, offene Ende hinaus geschoben oder gedrückt wird, eine Strecke von wenigstens 2 cm überwinden kann, ohne abzubrechen. Typischerweise ist das weiche Futtermittel - trotz seines hohen Wassergehalts - so kompakt und solide, dass man es, losgelöst von der Verpackung, mit den Fingern ergreifen und hochheben kann, ohne es dabei zu zerquetschen und ohne dass es in Einzelstücke zerfällt oder zerbricht.

Es ist bekannt, dass Katzen und Hunde Nassfutter ganz besonders lieben. Es ist daher eine weitere Aufgabe der vorliegenden Erfindung, den Haustierbesitzern ein Tierfutterprodukt zur Verfügung zu stellen, welches ein Futtermittel in Form eines Nassfutters aufweist, das sie ihrem Haustier, insbesondere ihrer Katze oder ihrem Hund, direkt aus der geöffneten Verpackung heraus von Hand in der gewünschten Geschwindigkeit und in der gewünschten Menge anbieten bzw. verfüttern können. Eine derartige enge und unmittelbare Interaktion zwischen Haustierbesitzer und Haustier fördert die Mensch-Tier-Beziehung, steigert das positive Fütterungserlebnis ganz wesentlich und kommt der Tierliebe vieler Hunde- und Katzenbesitzer sehr entgegen.

Ein weiterer Vorteil der einfachen technischen Handhabbarkeit dieses Futtermittels liegt darin, dass es an jedem beliebigen Ort innerhalb und ausserhalb der eigenen vier Wände werkzeugfrei, das heisst ohne Zuhilfenahme irgendwelcher Hilfsmittel wie Messer, Schere, Teller, Futterschale, Löffel oder sonstige Hilfsmittel, dem Haustier verabreicht werden kann, wobei es nicht einmal vollständig aus der Verpackung entnommen werden muss.

Diese Aufgaben-Kombination wird durch ein Tierfutterprodukt gelöst, wie es in den unabhängigen Patentansprüchen definiert ist. Weitere nützliche Ausführungsformen der Erfindung sind in den abhängigen Ansprüchen definiert.

### FIGURENBESCHREIBUNG

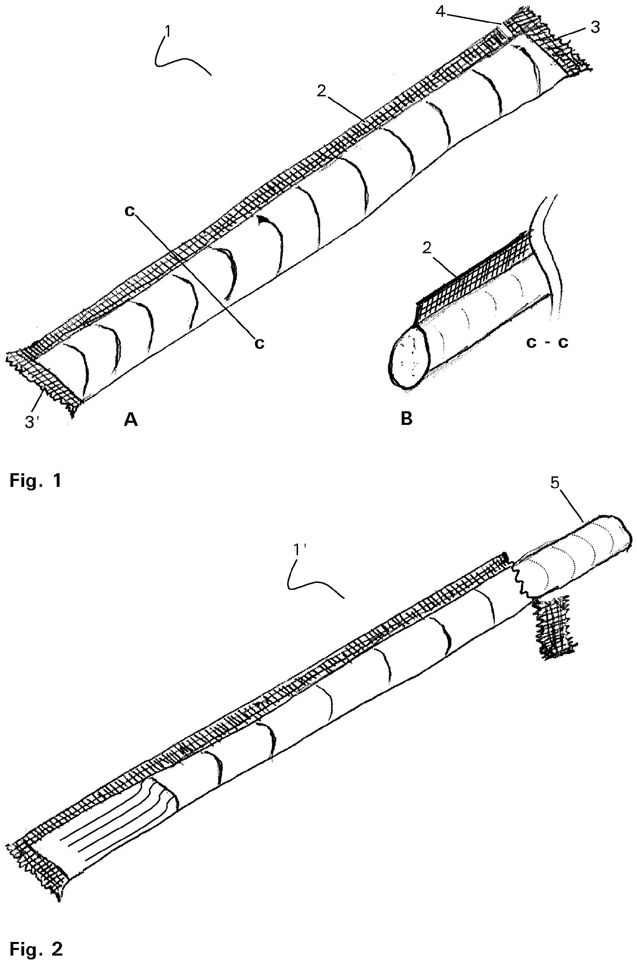

- Fig. 1: zeigt ein erfindungsgemässes Tierfutterprodukt in Form eines in einem Schlauchbeutel abgepackten Futtermittels in Schrägansicht von oben (A) und in einer Querschnittsansicht (B) entlang einer Schnittlinie c-c.
- Fig. 2: zeigt das Tierfutterprodukt von Fig. 1, wobei der Inhalt des an einem Ende aufgerissenen Schlauchbeutels ein Stück weit aus dem Schlauchbeutel herausragt.
- Fig. 3: zeigt ein Vergleichsprodukt aus dem Stand der Technik, mit nichtrandständig angeordneter Siegelnaht in Längsrichtung und spezieller Gestaltung des Aufreissbereiches an einem Ende, als Schrägansicht von oben (A) und als Querschnittsansicht (B) entlang einer Schnittlinie d-d.

### DETAILLIERTE BESCHREIBUNG DER ERFINDUNG

Die vorliegende Erfindung bezieht sich auf ein Tierfutterprodukt bestehend aus einer wasserdichten, autoklavierbaren Schlauchbeutel-Verpackung 1, 1', mit einem darin enthaltenen Futtermittel 5 aus der Kategorie Nassfutter, wobei das Futtermittel eine Brätmasse aus tierischen und/oder pflanzlichen Rohstoffen sowie mindestens einem Gelier- und/oder Verdickungsmittel und gegebenenfalls weiteren Zusätzen umfasst, dadurch gekennzeichnet, dass das Futtermittel einen Wassergehalt von mindestens 75 Gew.% und maximal 90 Gew.%;- einen Proteingehalt von 5-12 Gew.%,- einen Fettgehalt von 2 - 7 Gew.%,- einen Gehalt an Gelier- und/oder Verdickungsmittel von 0.2 - 4 Gew.%, sowie- optional einen Gehalt an Zusatzstoffen von 0.1 - 5 Gew.% aufweist, dass es im gebrauchsfertigen Zustand bei Raumtemperatur nicht fließfähig, sondern als länglicher Strang in Form eines Stäbchens oder Stängels mit einer halbfesten, schnitt- und stichfesten Konsistenz ausgebildet und in einem der Form des Futtermittels angepassten Schlauchbeutel abgepackt ist.

In einer ersten Ausführungsform bezieht sich die Erfindung auf ein solches Tierfutterprodukt, das sowohl als Alleinfutter als auch als Ergänzungsfutter und insbesondere auch als Zwischendurch-Mahlzeit oder als spezielle Belohnung für Hunde und Katzen vorgesehen ist. Es setzt sich im Wesentlichen zusammen aus der erwähnten Schlauchbeutelverpackung und einem darin enthaltenen Futtermittel in Form einer Brätmasse, die mindestens eine Komponente aus der Gruppe Fleisch, tierische Nebenerzeugnisse, Fisch, Fischerzeugnisse, Weich- und Krustentiere, pflanzliche Nebenerzeugnisse, pflanzliche Eiweissextrakte, Öle und Fette, Milch, Molkereierzeugnisse, Getreide enthält, und die weiters eine Komponente aus der Gruppe Geliermittel und Verdickungsmittel, sowie optional ausserdem mindestens einen Zusatz aus der Gruppe Mineralstoffe, geschmacksgebende oder geschmacksverstärkende Substanzen, Farbstoffe, Konservierungsmittel, Antioxidantien, Vitamine und Aminosäuren umfasst. Das Futtermittel erfüllt im gebrauchsfertigen Zustand folgende Kriterien: es ist bei Raumtemperatur
- nicht fliessfähig,
- ist von einer fleischigen, wurstähnlichen Textur mit einer kompakten, schnitt- und stichfesten, feinbrätartigen Konsistenz und einer beliebigen, typischerweise länglichen, stab- oder stäbchenförmige Gestalt;
- es weist eine mechanische Festigkeit auf, die es gestattet, das Futtermittel wenigstens 2 cm, gegebenenfalls wenigstens 3 - 5 cm, weit als zusammenhängenden, integren Strang, in horizontaler Richtung aus einem an einem Ende geöffneten Schlauchbeutel heraus zu befördern, beispielsweise vom geschlossenen Ende des Schlauchbeutels ausgehend durch das gegenüberliegende, offene Ende hinaus zu schieben oder hinaus zu drücken, ohne dass der Strang abreisst oder abbricht.

Für typische Anwendungszwecke hat das Futtermittel eine Konsistenz, die es erlaubt, das Futtermittel auch losgelöst von seiner Verpackung mit den Fingern zu ergreifen, beispielsweise aus einer beliebigen, geöffneten Verpackung zu entnehmen, ohne dass es dabei in Einzelteile zerfällt oder zerquetscht wird. Gleichzeitig ist es nicht annähernd so hart und fest wie Trockenfutter, sondern entspricht in Bezug auf seine Härte einem typischen Nassfutter, d.h. es ist relativ weich.

Nach dem erfindungsgemäßen Verfahren definiert in Anspruch 8 wird dies dadurch erreicht, dass tierische und/oder pflanzliche Rohstoffe der oben genannten Art vorgelegt, falls erforderlich ausserdem noch zerkleinert, gegebenenfalls püriert, eventuell mit gewünschten Zusatzstoffen versetzt und zu einer Brätmasse vermischt werden und dann die nachfolgenden Verfahrensschritte angewandt werden:
a) die Brätmasse wird - soweit erforderlich, gegebenenfalls durch Zugabe von Wasser - auf einen Wassergehalt von 76 - 88 Gew.% eingestellt, der im Endprodukt die gewünschte feinbrätartige Konsistenz ermöglicht; und
b) die Brätmasse wird mit wenigstens einem Verdickungs- und/oder Geliermittel versetzt, welches die im fertigen Endprodukt gewünschte mechanische Festigkeit einschliesslich der Stich- und Schnittfestigkeit ermöglicht; und
c) die solcherart vorbereitete Brätmasse wird in Schlauchbeutel abgefüllt und mittels üblicher verfahrenstechnischer Massnahmen einschliesslich einer keimabtötenden Hitzebehandlung zum Endprodukt verarbeitet.

Grundsätzlich könnte die Brätmasse zwar auch in anderer Form ausgestaltet und in andere Verpackungen abgefüllt werden, doch kommt der Vorteil dieser Art von Futtermittel am besten in Stäbchen- oder Stängelform und abgepackt in Schlauchbeutelverpackungen zur Wirkung, weil dadurch die Handhabung sehr einfach wird und man zur Anwendung weder Werkzeuge wie z.B. eine Schere, noch Hilfsmittel wie z.B. Löffel, Teller und dergleichen benötigt. Und auch die Finger bleiben sauber, wenn die Schlauchbeutelverpackung mit mindestens einer Aufreisskerbe, typischerweise in Schlitz- oder Dreiecksform, oder einer Sollbruchlinie versehen ist, weil man das Futtermittel nicht einmal zur Gänze aus der Verpackung entnehmen muss sondern dieses mitsamt der Verpackung erfassen und das Futtermittel aus der einseitig geöffneten Verpackung hinaus der Katze oder dem Hund entgegen schieben kann.

Das gebrauchsfertige Futtermittel enthält insgesamt rund 0.2 - 4 Gew.%, typischerweise 0.25 - 3 Gew.%, an Gelier- und/oder Verdickungsmitteln, abhängig von der Art der eingesetzten Gelier- und/oder Verdickungsmittel. Geeignete Gelier- und Verdickungsmittel sind im Stand der Technik bekannt, wie zum Beispiel Gelatine und quellfähige Polysaccharide, letztere insbesondere aus der Gruppe der Pektine, Alginate, Carrageene, Stärken, modifizierten Stärken, Johannisbrotkernmehl, Guarkernmehl, Gummi arabicum, Traganth, Konjak, Xanthan, Cassia, und Agar-Agar.

Weiters enthält das gebrauchsfertige Futtermittel in einer typischen Ausführungsform einen Proteinanteil von ca. 5 bis 8.5 Gew.%, einen Fettanteil von 2.5 bis 5 Gew.% und gegebenenfalls weitere Zusatzstoffe wie Mineralstoffe, geschmacksgebende oder geschmacksverstärkende Substanzen, Farbstoffe, Konservierungsmittel, Antioxidantien, Vitamine und/oder Aminosäuren in einer Gesamtmenge von 0.1 bis 5 Gew.%.

Typische Packungsgrössen des gegenständlichen Tierfutterproduktes umfassen pro Verzehreinheit etwa 2g bis 100g an Futtermittel, je nachdem, ob es für Katzen oder Hunde vorgesehen ist.

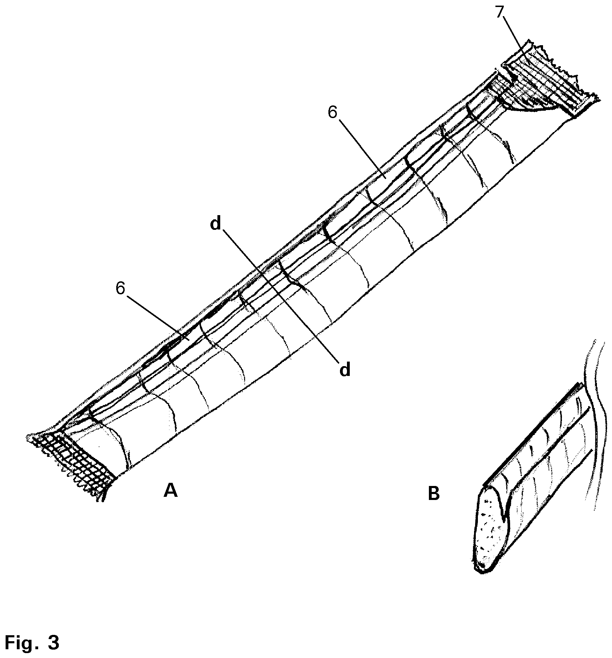

In einer Ausführungsform der Erfindung wird dem Umstand Rechnung getragen, dass zur Entnahme des Inhalts aus einem länglichen Schlauchbeutel 1 dieser über seine gesamte Breite geöffnet werden sollte. Anders als bei den im Stand der Technik bekannten Tierfutterprodukten mit fliessfähigen, insbesondere dünnflüssigen, Inhalten, bei denen die Schlauchbeutel nur einen Teil ihres Querschnitts als Öffnung freigeben sollen, ist für die gegenständlichen Tierfutterprodukte die Aufreissbarkeit des Schlauchbeutels über seine gesamte Breite bzw. über seinen gesamten Querschnitt von Vorteil und erwünscht. Dies erlaubt es - im Gegensatz zu den bekannten Tierfutterprodukten mit fliessfähigem Inhalt - die Schlauchfolie kostengünstig in Längsrichtung randständig zu versiegeln, ohne einen zusätzlichen Schritt eines Umklappens und zumindest endständigen Fixierens der längsseitigen Siegelnaht, wie in Abb. 3 an einem Vergleichsprodukt schematisch dargestellt, vornehmen zu müssen. Auch ist es nicht erforderlich, den Aufreissbereich technisch so zu gestalten, dass zwar ein gezieltes Einreissen ermöglicht aber ein vollständiges Durchreissen möglichst verhindert wird.

Im Stand der Technik bekannte, Schlauchbeutel-basierte Tierfutterprodukte mit flüssigem Inhalt weisen, wie in Fig. 3 anhand eines Vergleichsbeispiels dargestellt, häufig eine mittig oder leicht aussermittig angeordnete Schweiss- oder Siegelnaht 6 in Längsrichtung auf, welche zumindest in den beiden stirnseitigen Endbereichen umgeklappt und mit den quergesiegelten Nähten form- oder stoffschlüssig verbunden ist. Zudem sind solche Produkte mit einem speziell gestalteten Aufreiss-Ende 7 ausgestattet, das eine vordefinierte Öffnung erzeugen soll, die kleiner ist als der Querschnitt des Schlauchbeutels und die ein zielgerichtetes Entleeren des Schlauchbeutels erleichtert.

Bei den gemäss einer Ausführungsform der Erfindung eingesetzten, länglichen Schlauchbeuteln aus längsseitig gesiegeltem Folienmaterial, z.B. Aluminiumverbundfolie, können sowohl die in Längsrichtung verlaufende Schweiss- oder Siegelnaht 2, als auch die an den stirnseitigen Enden jeweils vorhandenen Schweiss- oder Siegelnähte 3, 3' dieselbe Breite und gegebenenfalls, wo vorhanden, auch dieselbe Prägung aufweisen.

Beispielsweise können die Schweiss- oder Siegelnähte 2,3,3' für die meisten Ausführungsformen der Erfindung eine Breite von ca. 2 - 10mm, insbesondere von ca. 3 - 6mm aufweisen, je nachdem, ob es sich um grössere Verzehreinheiten für Hunde oder kleinere für Katzen handelt. Dies lässt noch ausreichend Platz für das Einschneiden mindestens einer Kerbe 4 zum Zwecke der Erleichterung des vollständigen Aufreissens des Schlauchbeutels quer zu seiner Längsrichtung. Je nach Packungsgrösse überschreitet die Breite der Siegelnaht 2,3,3' zumindest im Bereich der Kerbe 4 die Länge der Kerbe um typischerweise mindestens 2 - 5mm.

Während im Falle von grösseren Portionen des Futtermittels die Verpackung pro Verzehreinheit eine Länge von typischerweise ca. 10 - 25 cm aufweist, können für kleinere Häppchen auch Schlauchbeutel von lediglich 5-10cm Länge zum Einsatz kommen. Dies erleichtert das Dosieren des Futters vor allem für kleinere Hunde und Katzen und hilft zu vermeiden, dass nicht vollständig aufgefressenes Futter mitsamt der angebrochenen Verpackung weggeworfen wird. Bei kleineren Verzehreinheiten ist die Wahrscheinlichkeit grösser, dass der gesamte Inhalt einer Verpackung vom Haustier verzehrt wird. Des Weiteren kann vor allem bei Schlauchbeuteln dieser Grösse die Aufreisskerbe 4 auch stirnseitig, d.h. im Bereich wenigstens einer der beiden quergesiegelten Nähte 3,3', angeordnet sein, so dass der Schlauchbeutel in Längsrichtung aufgerissen wird.

Unter den Begriffen "Verschweissen" oder "Versiegeln" soll hierin grundsätzlich auch "Verkleben" mit umfasst sein, soweit solches für die Anwendung im Bereich der Tiernahrungsmittel-Herstellung in Betracht kommt und zulässig ist. Analog schliesst der Ausdruck "Siegelnaht" auch den Begriff "Klebenaht" mit ein.

Geeignete Schlauchbeutel sind üblicherweise aus einem futtermitteltauglichen Folienmaterial, insbesondere aus Aluminiumverbundfolie, Kunststoffverbundfolie mit und ohne Sperrschichten, oder aus imprägniertem oder beschichtetem Papier gefertigt. Entscheidend ist ausserdem, dass sie die im Zuge der Endproduktherstellung erforderliche Hitzebehandlung im Autoklaven schadlos und ohne Abgabe unerwünschter Emissionen überstehen.

In einer weiteren Ausführungsform bezieht sich die Erfindung auf ein Verfahren zur Herstellung des erfindungsgemässen Tierfutterproduktes und umfasst die folgenden Schritte:
a) es wird eine Mischung aus tierischen und/oder pflanzlichen Rohstoffen sowie einem oder mehreren Gelier- und/oder Verdickungsmitteln vorbereitet, falls erforderlich zerkleinert, gegebenenfalls püriert, optional mit weiteren Zusatzstoffen in einer Gesamtmenge von typischerweise 0.1 - 5 Gew.% versetzt und zu einer pumpfähigen Brätmasse vermischt, wobei - gegebenenfalls durch Beimischung von Wasser - ein Wassergehalt von 75 - 90 Gew.%, typischerweise von 76 - 88 Gew.%; ein Proteingehalt von 5 - 12 Gew.%, typischerweise von 5 bis 8.5 Gew.%; ein Fettgehalt von 2 bis 7 Gew.%, typischerweise von 2.5 bis 5 Gew.%; und ein Gehalt an Gelier- und/oder Verdickungsmitteln von 0.2 - 4 Gew.%, typischerweise von 0.25 - 3 Gew.%, jeweils bezogen auf die fertige Endmischung der Brätmasse, eingestellt wird; worauf
b) die Brätmasse in Form eines Stäbchens oder Stängels in eine wasserdichte, bis wenigstens 150°C hitzebeständige Schlauchbeutelverpackung abgefüllt und die befüllte Schlauchbeutelverpackung verschlossen wird; worauf c) die Schlauchbeutelverpackung mit der darin abgefüllten Brätmasse zum Zwecke der Hygienisierung und Haltbarmachung einer Hitzebehandlung unterzogen und danach aktiv oder passiv auf Raumtemperatur abgekühlt wird;wobei sich die Brätmasse durch das Abkühlen zu dem, halbfesten, stich- und schnittfesten Futtermittel der Kategorie Nassfutter mit feinbrätartiger Konsistenz verfestigt.

In der industriellen Fertigung erfolgt das Erzeugen und Befüllen eines so genannten Dreirandsiegel-Schlauchbeutels üblicherweise ab Rolle, d.h. ausgehend von einer planen Endlosfolie, die maschinell um einen im wesentlichen zylindrischen Befüllstutzen geschlagen und kontinuierlich an den längsseitigen Enden verschweisst oder versiegelt wird. Der solcherart kontinuierlich entstehende, längsgesiegelte Schlauch wird während seines Weitertransports stossweise jeweils mit einer vorbestimmten, einer Verzehreinheit entsprechenden Menge an Brätmasse befüllt und durch Quersiegelung in die einzelnen Portionen bzw. Schlauchbeuteleinheiten unterteilt. Gleichzeitig erfolgt das Einschneiden der Aufreisskerben 4 an der längsseitigen 2 und/oder querseitigen 3,3' Siegelnaht und das Abtrennen der einzelnen Schlauchbeuteleinheiten aus dem Endlosschlauch-Verbund im Bereich der quergesiegelten Trennflächen.

Anstelle des Einschneidens wenigstens einer Aufreisskerbe pro Schlauchbeuteleinheit kann die längs oder quer verlaufende Siegelnaht als spezielle Siegelnaht mit einem Saum aus Wellen- oder Sägezahnmuster ausgeführt werden, was das Einreissen ebenfalls erleichtert.

Anstelle eines Dreirandsiegel-Schlauchbeutels kann auch ein autoklavierbares Stickpack-System zum Einsatz gelangen, welches in Längsrichtung überhaupt keine Naht aufweist. In diesem Fall kann anstelle von Aufreisskerben oder spezieller Siegelnaht mit Wellen- oder Sägezahnmuster an jedem der beiden Enden eine gewöhnliche, quer zur Längsrichtung verlaufende Siegelnaht mit wenigstens einer integrierten Sollbruchlinie vorgesehen sein.

Die Brätmasse in den befüllten Schlauchbeuteleinheiten wird durch die Hitzebehandlung sowohl gekocht als auch haltbar gemacht. Die Hitzebehandlung ist im Stand der Technik bekannt und kann beispielsweise durch heissen Wasserdampf bei einer Temperatur von ca. 70 - 130°C über eine Zeitdauer von 5 bis 25 min erfolgen und wird üblicherweise in einem Autoklaven bei einem Druck von ca. 1 - 2 bar durchgeführt. Dabei werden nicht nur unerwünschte mikrobielle Keime abgetötet sondern die Rohstoffe durch chemische Reaktionen untereinander mindestens teilweise in eine leichter bekömmliche Form umgewandelt.

Durch das anschliessende aktive Abkühlen oder passive Abkühlenlassen auf Raumtemperatur, d.h. auf eine Temperatur von ca. 20 - 25°C, verfestigt sich die ursprünglich fliess- oder zumindest pumpfähige Brätmasse zu dem erfindungsgemäss weichen, aber dennoch stich- und schnittfesten Futtermittel halbfester Konsistenz.

Die bei der Herstellung der Brätmasse verwendeten Gelier- und/oder Verdickungsmittel werden gesamthaft in einer Menge, bezogen auf die gesamte Brätmasse, von ca. 0.2 - 4 Gew.%, meist von ca. 0.25 bis 3 Gew.%, zugesetzt. Dabei ist unter anderem zu beachten, dass die Gelier- und/oder Verdickungsmittel so ausgewählt werden, dass wenigstens eines dieser Gelier- und/oder Verdickungsmittel durch die Hitzebehandlung seine Quellfähigkeit nicht oder nicht wesentlich einbüsst.

Die nachfolgenden praktischen Beispiele dienen einem besseren Verständnis der Erfindung und sind keinesfalls einschränkend zu verstehen.

### BEISPIEL 1: Futtermittel auf der Basis von tierischem Gewebe

1000g eines oder mehrerer tierischer Rohstoffe aus der Gruppe der tierischen Gewebe von Geflügel, Schwein, Rind, Wild, Lamm, Fisch, Weich- oder Krustentiere, werden vermischt und z.B. mittels eines Cutters oder eines Fleischwolfs zerkleinert. Dann wird Carrageen, typischerweise iota- oder kappa-Carrageen oder eine Mischung aus beiden, in einer Menge von gesamthaft 25g zugemischt.

Der breiigen Mischung wird ausserdem Guarkernmehl in einer Menge von 5g zugesetzt und innig vermengt, so dass sich ohne Zusatz von Wasser ein Gesamtwassergehalt von ca. 76 Gew.% ergibt. Für die Herstellung verschiedener Futtermittel-Proben wurde der Gesamtwassergehalt durch Wasser-Beimischung in einem Bereich von 76 - 88 Gew.% variiert. Die so erzeugte, im wesentlichen stückfreie Brätmasse wird anschliessend an einer Abfüllmaschine in einen kontinuierlich entstehenden Endlos-Schlauch aus in Längsrichtung randständig gesiegelter Aluminiumverbundfolie abgefüllt, wobei durch Heisssiegelung quer zur Längsrichtung der Schlauch in etwa 15 cm lange, etwa fingerdicke Schlauchbeuteleinheiten à ca. 10g Inhalt unterteilt wird. Unmittelbar darauf werden die Schlauchbeuteleinheiten im Bereich oder in der Nähe des Bereiches der durch die Quersiegelung entstandenen Trennflächen mit mindestens einer Sollbruchlinie oder mindestens einer kurzen Aufreisskerbe innerhalb der längs oder quer verlaufenden Siegelnaht versehen und im Bereich der quergesiegelten Trennflächen vom Endlosschlauch abgetrennt.

Die derart versiegelten und befüllten Schlauchbeuteleinheiten werden schliesslich im Autoklaven bei 115°C über einen Zeitraum von 18 min und einem Druck von 1.6 bar erhitzt. Für manche Brätzusammensetzungen oder Anwendungszwecke kann es hingegen nützlich sein, die Hitzebehandlung schonender bei niedrigeren Temperaturen, beispielsweise bei einer Temperatur zwischen 70 und 100°C in mehreren Intervallen oder durchgehend in einem Intervall von wenigstens 25 min durchzuführen.

Nach der Hitzebehandlung kühlen die befüllten Schlauchbeuteleinheiten auf Raumtemperatur ab, wobei sich das Brät im Inneren jedes Schlauchbeutels auf die gewünschte Konsistenz verfestigt und ein gebrauchsfertiges, halbfestes, schnitt- und stichfestes Tierfutterprodukt für Hunde oder Katzen im Einklang mit der vorliegenden Erfindung entsteht.

### BEISPIEL 2

Zusammensetzung und Verarbeitung wie in Beispiel 1, mit dem Unterschied, dass zur Herstellung unterschiedlicher Futtermittelproben die Menge an Carrageen im Bereich von 3.5 bis 15 g variiert wird.

Alle resultierenden Endprodukte erfüllen die angestrebten Kriterien sowohl in Bezug auf Konsistenz als auch in Bezug auf die Akzeptanz durch Hauskatzen, wie in entsprechenden Fütterungsversuchen bestätigt werden konnte.

### BEISPIEL 3

Zusammensetzung und Verarbeitung wie in Beispiel 2, mit dem Unterschied, dass anstelle von Guarkernmehl Xanthan als Gelier- oder Verdickungsmittel in einer Konzentration von 2.5 bis 8.5 g je 1000g tierischer Rohstoffe eingesetzt wird. Die Resultate sind vergleichbar mit jenen aus Beispiel 2.

### BEISPIEL 4

Zusammensetzung und Verarbeitung wie in Beispiel 2, mit dem Unterschied, dass anstelle von Guarkernmehl Konjak als Gelier- oder Verdickungsmittel in einer Konzentration von 8 bis 15 g je 1000g tierischer Rohstoffe eingesetzt wird. Die Resultate sind vergleichbar mit jenen aus Beispiel 2.

### BEISPIEL 5

Zusammensetzung und Verarbeitung wie in Beispiel 2, mit dem Unterschied, dass anstelle von Guarkernmehl eine Mischung aus Xanthan in einer Konzentration von 2.5 bis 8.5 g und Konjak in einer Konzentration von 8 bis 15 g je 1000g tierischer Rohstoffe eingesetzt wird.

Mit dieser Mischung an Gelier- und Verdickungsmitteln, nämlich Carrageen, Xanthan und Konjak in den erwähnten Konzentrationen, konnten die besten Resultate in Hinblick auf Konsistenz und Handhabbarkeit erzielt werden. Auch die Fütterungsversuche an verschiedenen Hauskatzen lieferten zufriedenstellende Ergebnisse.

### BEISPIEL 6: Futtermittel auf der Basis von tierischen und/oder pflanzlichen Trockenmehlen

Die Herstellung und Verarbeitung der Brätmasse erfolgt wie in Beispiel 1, nur dass statt tierischem Gewebe eine Mischung aus 85 Gew.% Tiermehlen und 15 Gew.% Maisstärke eingesetzt wird. Je 1000g der Mischung werden 25g Gelatine und 15g Johannisbrotkernmehl hinzugefügt und durch die Beimischung von Wasser für die Herstellung verschiedener Proben auf einen Gesamtwassergehalt der rohen Brätmasse von ca. 75 - 90 Gew.% eingestellt.

Die weitere Verarbeitung erfolgt wie in Beispiel 1. Die so hergestellten Futtermittel-Proben zeigen im angegeben Bereich des Gesamtwassergehalts akzeptable Konsistenzunterschiede und liegen allesamt im Bereich der erfindungsgemässen Anforderungen.

## Patentansprüche

1. Tierfutterprodukt für Haustiere, insbesondere für Hunde oder Katzen, bestehend aus einem Futtermittel (5) aus der Kategorie Nassfutter und einer wasserdichten, autoklavierbaren Schlauchbeutelverpackung (1,1'), wobei das Futtermittel (5) eine Brätmasse aus tierischen und/oder pflanzlichen Rohstoffen sowie mindestens einem Gelier- und/oder Verdickungsmittel und gegebenenfalls weiteren Zusätzen umfasst, **dadurch gekennzeichnet, dass** das Futtermittel (5)
- einen Wassergehalt von mindestens 75 Gew.% und maximal 90 Gew.%;
- einen Proteingehalt von 5-12 Gew.%,
- einen Fettgehalt von 2 - 7 Gew.%,
- einen Gehalt an Gelier- und/oder Verdickungsmittel von 0.2 - 4 Gew.%, sowie
- optional einen Gehalt an Zusatzstoffen von 0.1 - 5 Gew.% aufweist,
dass es im gebrauchsfertigen Zustand bei Raumtemperatur nicht fliessfähig sondern als länglicher Strang in Form eines Stäbchens oder Stängels mit einer halbfesten, schnitt- und stichfesten Konsistenz ausgebildet und in einem der Form des Futtermittels angepassten Schlauchbeutel abgepackt ist.

2. Tierfutterprodukt nach Anspruch 1, **dadurch gekennzeichnet, dass** die Brätmasse mindestens eine Komponente aus der Gruppe Fleisch, tierische Nebenerzeugnisse, Tiermehle, Fisch, Fischerzeugnisse, Weich- und Krustentiere, pflanzliche Nebenerzeugnisse, pflanzliche Eiweissextrakte, Öle und Fette, Milch, Molkereierzeugnisse, Getreide und Pflanzenmehle enthält.

3. Tierfutterprodukt nach Anspruch 1, **dadurch gekennzeichnet, dass** die Brätmasse mindestens einen Zusatzstoff aus der Gruppe der Mineralstoffe, geschmacksgebenden oder geschmacksverstärkenden Substanzen, Farbstoffe, Konservierungsmittel, Antioxidantien, Aminosäuren und Vitamine enthält.

4. Tierfutterprodukt nach Anspruch 1, **dadurch gekennzeichnet, dass** das Gelier- und/oder Verdickungsmittel aus der Gruppe Gelatine, Pektine, Alginate, Carrageene, Stärken, modifizierte Stärken, Johannisbrotkernmehl, Guarkernmehl, Gummi arabicum, Traganth, Konjak, Xanthan, Cassia, und Agar-Agar ausgewählt ist.

5. Tierfutterprodukt nach Anspruch 1, **dadurch gekennzeichnet, dass** die Schlauchbeutelverpackung (1) eine längliche Form aufweist und entweder als Dreirandsiegel-Schlauchbeutel ausgeführt ist, wobei der Schlauchbeutel an jedem seiner beiden Enden eine quer zur Längsrichtung verlaufende Siegelnaht (3,3') sowie entlang seiner Längsseite eine randständige Siegelnaht (2) aufweist, oder als Stickpack-Schlauchbeutel ohne längsseitige Siegelnaht, mit lediglich quer verlaufenden Siegelnähten an den Enden.

6. Tierfutterprodukt nach Anspruch 1, **dadurch gekennzeichnet, dass** die Schlauchbeutelverpackung wenigstens eine Aufreisshilfe, insbesondere Aufreisskerbe oder Sollbruchlinie, aufweist, die ein werkzeugloses Öffnen der Schlauchbeutelverpackung erlaubt.

7. Tierfutterprodukt nach Anspruch 1, **dadurch gekennzeichnet, dass** die Schlauchbeutelverpackung (1) aus einem futtermitteltauglichen, bis wenigstens 150°C hitzebeständigen Folienmaterial, insbesondere aus Aluminiumverbundfolie, Kunststoffverbundfolie, oder aus imprägniertem oder beschichtetem Papier, gefertigt ist.

8. Verfahren zur Herstellung eines Tierfutterproduktes nach Anspruch 1, wobei das Tierfutterprodukt aus einem Futtermittel (5) aus der Kategorie Nassfutter und einer wasserdichten, autoklavierbaren Schlauchbeutelverpackung (1,1') besteht und das Futtermittel im gebrauchsfertigen Zustand bei Raumtemperatur nicht fliessfähig sondern als länglicher Strang in Form eines Stäbchens oder Stängels mit einer halbfesten, schnitt- und stichfesten Konsistenz ausgebildet und in einem der Form des Futtermittels angepassten Schlauchbeutel abgepackt ist, wobei
a) eine Mischung aus tierischen und/oder pflanzlichen Rohstoffen, unter Hinzufügung wenigstens eines Gelier- und/oder Verdickungsmittels, vorbereitet sowie gegebenenfalls mit weiteren Zusätzen versetzt, bei Bedarf zerkleinert, gegebenenfalls püriert, und zu einer pumpfähigen Brätmasse gemischt wird; wobei
- ein Wassergehalt von 75 - 90 Gew.%, typischerweise von 76 - 88 Gew.%,
- ein Proteingehalt von 5 - 12 Gew.%, typischerweise von 5 bis 8.5 Gew.%,
- ein Fettgehalt von 2 bis 7 Gew.%, typischerweise von 2.5 bis 5 Gew.%, und
- ein Gehalt an Gelier- und/oder Verdickungsmitteln von 0.2 - 4 Gew.%, typischerweise von 0.25 - 1.5 Gew.%,
jeweils bezogen auf die fertige Endmischung der Brätmasse, eingestellt wird; worauf
b) die Brätmasse in Form eines Stäbchens oder Stängels in eine wasserdichte, bis wenigstens 150°C hitzebeständige Schlauchbeutelverpackung abgefüllt und die befüllte Schlauchbeutelverpackung verschlossen wird; worauf
c) die Schlauchbeutelverpackung mit der darin abgefüllten Brätmasse zum Zwecke der Hygienisierung und Haltbarmachung einer Hitzebehandlung unterzogen und danach aktiv oder passiv auf Raumtemperatur abgekühlt wird;
wobei sich die Brätmasse durch das Abkühlen zu dem, halbfesten, stich- und schnittfesten Futtermittel der Kategorie Nassfutter mit feinbrätartiger Konsistenz verfestigt.

9. Verfahren nach Anspruch 8, **dadurch gekennzeichnet, dass** als hitzebeständige Schlauchbeutelverpackung ein autoklavierbares Stickpack-System zum Einsatz gelangt, welches in Längsrichtung keine Naht aufweist

10. Verfahren nach Anspruch 8, **dadurch gekennzeichnet, dass** die Brätmasse mindestens eine Komponente aus der Gruppe Fleisch, tierische Nebenerzeugnisse, Tiermehle, Fisch, Fischerzeugnisse, Weich- und Krustentiere, pflanzliche Nebenerzeugnisse, pflanzliche Eiweissextrakte, Öle und Fette, Milch, Molkereierzeugnisse, Getreide, und Pflanzenmehle enthält.

11. Verfahren nach Anspruch 8, **dadurch gekennzeichnet, dass** der Brätmasse mindestens ein Zusatzstoff aus der Gruppe der Mineralstoffe, geschmacksgebenden oder geschmacksverstärkenden Substanzen, Farbstoffe, Konservierungsmittel, Antioxidantien, Aminosäuren und Vitamine in einer Menge von insgesamt 0.1 - 5 Gew.% beigemengt wird.

12. Verfahren nach Anspruch 8, **dadurch gekennzeichnet, dass** die Hitzebehandlung durch Heissdampf bei einer Temperatur im Bereich von 70 - 130°C kontinuierlich oder in Intervallen über eine Zeitdauer von 5 - 25 min und einem Druck von 1 - 2 bar erfolgt.

13. Verfahren nach Anspruch 8, **dadurch gekennzeichnet, dass** die Schlauchbeutelverpackung wenigstens eine Siegelnaht aufweist und nach dem Befüllen mit Brätmasse mit wenigstens einer Aufreisskerbe oder Sollbruchlinie oder mit einem das Aufreissen erleichternden Wellen- oder Sägezahnsaum im Bereich einer Siegelnaht ausgestattet wird.

## Claims

1. An animal feed product for pets, in particular dogs or cats, comprising an animal feed (5) from the wet food category and a watertight, autoclavable tubular bag package (1, 1'), the animal feed (5) including a sausage material made of animal and/or vegetable raw materials and at least one gelling agent and/or thickening agent, and optionally further additives, **characterized in that** the animal feed (5) has
- a water content of at least 75 wt-% and at most 90 wt-%;
- a protein content of 5 - 12 wt-%,
- a fat content of 2 - 7 wt-%,
- a gelling agent and/or thickening agent content of 0.2 - 4 wt-%, and
- optionally an additive content of 0.1 - 5 wt-%,
and that the animal feed product is not flowable at room temperature in the ready-to-use state, but, rather, is designed as an elongated strand in the form of a rod or stalk having a semisolid, cut- and penetration-resistant consistency, and is packaged in a tubular bag that is adapted to the form of the animal feed.

2. The animal feed product according to Claim 1, **characterized in that** the sausage material contains at least one component from the group comprising meat, animal by-products, animal meal, fish, fish products, shellfish and crustaceans, vegetable by-products, vegetable protein extracts, oils and fats, milk, dairy products, cereals, and vegetable meal.

3. The animal feed product according to Claim 1, **characterized in that** the sausage material contains at least one additive from the group comprising minerals, flavoring or flavor-enhancing substances, dyes, preservatives, antioxidants, amino acids, and vitamins.

4. The animal feed product according to Claim 1, **characterized in that** the gelling agent and/or thickening agent are/is selected from the group comprising gelatins, pectins, alginates, carrageenans, starches, modified starches, locust bean gum, guar gum, gum arabic, tragacanth, konjac, xanthan gum, cassia, and agar-agar.

5. The animal feed product according to Claim 1, **characterized in that** the tubular bag packaging (1) has an elongated shape, and is designed either as a three-side sealed tubular bag, the tubular bag at each of its two ends having a sealing seam (3, 3') extending transversely with respect to the longitudinal direction, and along its longitudinal side having a sealing seam (2) on
the edge side, or as a stick pack tubular bag without a longitudinal sealing seam, and with only transversely extending sealing seams at the ends.

6. The animal feed product according to Claim 1, **characterized in that** the tubular bag packaging has at least one tearing aid, in particular a tear notch or predetermined breaking line, that allows the tubular bag packaging to be opened without tools.

7. The animal feed product according to Claim 1, **characterized in that** the tubular bag packaging (1) is made from a foil/film material that is suitable for animal feed, in particular a composite aluminum foil or composite plastic film, or from impregnated or coated paper, and that is heat-resistant to at least 150°C.

8. A method for manufacturing an animal feed product according to Claim 1, the animal feed product comprising an animal feed (5) from the wet food category and a watertight, autoclavable tubular bag package (1, 1'), and the animal feed not being flowable at room temperature in the ready-to-use state, but, rather, being designed as an elongated strand in the form of a rod or stalk having a semisolid, cut- and penetration-resistant consistency, and being packaged in a tubular bag that is adapted to the form of the animal feed, wherein
a) a mixture of animal and/or vegetable raw materials, with addition of at least one gelling agent and/or thickening agent, is prepared and optionally combined with further additives, comminuted if necessary, optionally pureed, and mixed to form a pumpable sausage material; wherein
- a water content of 75 - 90 wt-%, typically 76 - 88 wt-%,
- a protein content of 5 - 12 wt-%, typically 5 to 8.5 wt-%,
- a fat content of 2 to 7 wt-%, typically 2.5 to 5 wt-%, and
- a gelling agent and/or thickening agent content of 0.2 - 4 wt-%, typically 0.25 - 1.5 wt-%,
is set, in each case based on the final blend of the sausage material; whereupon
b) the sausage material in the form of a rod or stalk is filled into a watertight tubular bag package that is heat-resistant to at least 150°C, and the filled tubular bag package is closed; whereupon
c) the tubular bag package together with the sausage material filled therein is subjected to a heat treatment for purposes of hygienization and preservation, and is subsequently actively or passively cooled to room temperature;
wherein the sausage material is solidified by cooling to form the semisolid, cut- and penetration-resistant animal feed of the wet food category having a finely ground sausage consistency.

9. The method according to Claim 8, **characterized in that** an autoclavable stick pack system having no seam in the longitudinal direction is used as heat-resistant tubular bag packaging.

10. The method according to Claim 8, **characterized in that** the sausage material contains at least one component from the group comprising meat, animal by-products, animal meal, fish, fish products, shellfish and crustaceans, vegetable by-products, vegetable protein extracts, oils and fats, milk, dairy products, cereals, and vegetable meal.

11. The method according to Claim 8, **characterized in that** at least one additive from the group comprising minerals, flavoring or flavor-enhancing substances, dyes, preservatives, antioxidants, amino acids, and vitamins is admixed with the sausage material in a total quantity of 0.1 - 5 wt-%.

12. The method according to Claim 8, **characterized in that** the heat treatment takes place using superheated steam at a temperature in the range of 70 - 130°C, continuously or at intervals, over a period of 5 - 25 min and a pressure of 1 - 2 bar.

13. The method according to Claim 8, **characterized in that** the tubular bag packaging has at least one sealing seam, and after the filling with sausage material, is provided with at least one tear notch or predetermined breaking line, or with a corrugated or sawtooth seam that facilitates tearing, in the area of a sealing seam.

## Revendications

1. Produit d'alimentation animale destiné à des animaux de compagnie, notamment des chiens ou des chats, ledit produit comprenant un aliment (5) de la catégorie des aliments humides et un emballage de type sac tubulaire étanche et autoclavable (1, 1'), l'aliment (5) comprenant une masse carnée formée de matières premières animales et/ou végétales et d'au moins un agent gélifiant et/ou épaississant et éventuellement d'autres additifs, **caractérisé en ce que** l'aliment (5) présente
- une teneur en eau d'au moins 75 % en poids et d'au plus 90 % en poids ;
- une teneur en protéines de 5 à 12 % en poids,
- une teneur en matières grasses de 2 à 7 % en poids,
- une teneur en agent gélifiant et/ou épaississant de 0,2 à 4 % en poids, et
- éventuellement une teneur en additifs de 0,1 à 5 % en poids,
**en ce que**, lorsqu'il est prêt à l'emploi, il ne coule pas à température ambiante mais est conçu comme une barre allongée sous la forme d'un bâtonnet ou d'une tige dont la consistance est semi-solide, résistante aux coupures et aux perforations et est conditionné dans un sac tubulaire adapté à la forme de l'aliment.

2. Produit d'alimentation animale selon la revendication 1, **caractérisé en ce que** la masse carnée contient au moins un composant du groupe comprenant des viandes, des sous-produits animaux, des farines animales, des poissons, des produits de la pêche, des mollusques et crustacés, des sous-produits végétaux, des extraits de protéines végétales, des huiles et graisses, du lait, des produits laitiers, des céréales et des farines végétales.

3. Produit d'alimentation animale selon la revendication 1, **caractérisé en ce que** la masse carnée contient au moins un additif du groupe comprenant les minéraux, les aromatisants ou exhausteurs de goût, les colorants, les conservateurs, les antioxydants, les acides aminés et les vitamines.

4. Produit d'alimentation animale selon la revendication 1, **caractérisé en ce que** l'agent gélifiant et/ou épaississant est sélectionné dans le groupe comprenant la gélatine, les pectines, les alginates, les carraghénanes, les amidons, les amidons modifiés, la gomme de caroube, la gomme de guar, la gomme arabique, la gomme adragante, le konjac, le xanthane, la cassie et l'agar-agar.

5. Produit d'alimentation animale selon la revendication 1, **caractérisé en ce que** l'emballage de type sac tubulaire (1) a une forme allongée et est conçu soit comme un sac tubulaire scellé sur trois côtés, le sac tubulaire comportant une couture de scellement (3, 3') qui s'étend transversalement à la direction longitudinale à chacune de ses deux extrémités et une couture de scellement marginale (2) sur son côté long, soit comme un sac tubulaire de type bâtonnet sans couture de scellement longitudinale, avec uniquement des coutures de scellement transversales aux extrémités.

6. Produit d'alimentation animale selon la revendication 1, **caractérisé en ce que** l'emballage de type sac tubulaire comporte au moins un auxiliaire d'ouverture, notamment une encoche de déchirure ou une ligne de rupture qui permet d'ouvrir l'emballage de type sac tubulaire sans outil.

7. Produit d'alimentation animale selon la revendication 1, **caractérisé en ce que** le sac d'emballage de type sac tubulaire (1) est fabriqué à partir d'un film de matériau compatible avec l'aliment et résistant à la chaleur jusqu'à au moins 150 °C, en particulier à partir d'une feuille composite d'aluminium, d'une feuille composite de matière synthétique, ou d'un papier imprégné ou enduit.

8. Procédé de fabrication d'un produit d'alimentation animale selon la revendication 1, le produit d'alimentation animale comprenant un aliment (5) de la catégorie des aliments humides et un emballage de type sac tubulaire étanche et autoclavable (1, 1') et l'aliment étant conçu, à l'état prêt à l'emploi, comme n'étant pas coulant à la température ambiante mais sous la forme d'une barre allongée en forme de bâtonnet ou de tige dont la consistance est semi-solide, résistante aux coupures et aux perforations et est conditionné dans un sac tubulaire adapté à la forme de l'aliment,
a) un mélange de matières premières animales et/ou végétales, additionné d'au moins un agent gélifiant et/ou épaississant, étant préparé et éventuellement mélangé à d'autres additifs, broyé si nécessaire, éventuellement réduit en purée et mélangé pour former une masse carnée pouvant être pompée ;
- une teneur en eau de 75 à 90 % en poids, typiquement de 76 à 88 % en poids,
- une teneur en protéines de 5 à 12 % en poids, typiquement de 5 à 8,5 % en poids,
- une teneur en matières grasses de 2 à 7 % en poids, typiquement de 2,5 à 5 % en poids, et
- une teneur en agents gélifiants et/ou épaississants de 0,2 à 4 % en poids, typiquement de 0,25 à 1,5 % en poids,
étant ajustées à chaque fois sur la base du mélange final produit de la masse carnée ; puis
b) la masse carnée venant remplir sous forme de bâtonnets ou de tiges dans un sac tubulaire étanche résistant à la chaleur jusqu'à au moins 150 °C et le sac tubulaire rempli étant fermé ; puis
c) l'emballage de type sac tubulaire remplié de la masse carnée étant soumis à un traitement thermique pour des raisons d'hygiène et de conservation, puis refroidi activement ou passivement à température ambiante ;
la masse carnée se solidifiant par refroidissement pour former l'aliment semi-solide, résistant à la perforation et aux coupures de la catégorie des aliments humides dont la consistance est similaire à celle d'une viande fine.

9. Procédé selon la revendication 8, **caractérisé en ce qu'**un système d'emballage de type bâtonnet autoclavable est utilisé comme emballage de type sac tubulaire résistant à la chaleur, lequel n'a pas de couture dans la direction longitudinale.

10. Procédé selon la revendication 8, **caractérisé en ce que** la masse carnée contient au moins un composant du groupe comprenant la viande, les sous-produits animaux, les farines animales, le poisson, les produits de la pêche, les mollusques et crustacés, les sous-produits végétaux, les extraits de protéines végétales, les huiles et graisses, le lait, les produits laitiers, les céréales et les farines végétales.

11. Procédé selon la revendication 8, **caractérisé en ce qu'**au moins un additif du groupe comprenant les minéraux, les aromatisants ou exhausteurs de goût, les colorants, les conservateurs, les antioxydants, les acides aminés et les vitamines est ajouté à la masse carnée dans une quantité totale de 0,1 à 5 % en poids.

12. Procédé selon la revendication 8, **caractérisé en ce que** le traitement thermique est effectué par de la vapeur surchauffée à une température de l'ordre de 70 à 130°C en continu ou par intervalles sur une durée de 5 à 25 minutes et à une pression de 1 à 2 bar.

13. Procédé selon la revendication 8, **caractérisé en ce que** l'emballage de type sac tubulaire comporte au moins une couture de scellement et, après avoir effectué le remplissage avec de la masse carnée, est muni d'au moins une encoche de déchirure ou une ligne de rupture ou un repli ondulé ou en dents de scie, facilitant la déchirure, dans la zone d'une couture de scellement.
